# EUROPEAN PATENT SPECIFICATION

(11) **EP 0 480 166 B1**
(45) Date of publication and mention of the grant of the patent: **30.11.1994**
(21) Application number: 91114738.7
(22) Date of filing: 02.09.1991
(51) Int. Cl.: B60J 7/057

(54) **Operating device for opening and closing motor vehicle canopies**
Betätigungseinrichtung zum Öffnen und Schliessen von Kraftfahrzeug-Kabinendächern
Dispositif de commande pour ouvrir et fermer des verrières de véhicules automobiles

(30) Priority: 09.10.1990 IT 294690
(43) Date of publication of application: 15.04.1992
(73) Proprietor: ZANI S.R.L, I-25066 Lumezzane (Brescia) (IT)
(72) Inventor: Zani, Bruno, I-25066 Lumezzane (Brescia) (IT); Zani, Duilio, I-25066 Lumezzane (Brescia) (IT)
(74) Representative: Lecce, Giovanni

(56) References cited:
- DE-A- 3 323 030
- DE-A- 3 336 271
- DE-A- 3 910 894
- DE-C- 3 529 118

## Description

The present invention relates to an operating device for opening and closing motor vehicle canopies consisting substantially of rigid supports constrained to the canopies and on which there are coupling means which engage in an equal number of connections located on sliding levers.

Each of said levers includes a pair of moving fulcrums which engage with the ends of traversing members and transverse lever pivots with circular sector gears. The sector gears mesh with racks integral with carriages which slide when pulled and on which are pivoted said sector gears and are capable of moving longitudinally along slots.

Said traversing members and said carriages are connected together by means of sliding plates whose function is to guide longitudinally and in rotation the movement of said circular sector gears during raising and/or lowering and traversing in opening and/or closing of the canopies, all with dragging movement and coupling, preferably but not in a limiting manner, with paired helical cables using a geared system preferably with reduction of revolutions and operated by a folding crank or an electric motor.

Openable canopies applied or applicable in first or second installation on automotive vehicles in general are substantially equipped with means of opening and/or closing having different structures and configurations depending on the applications, the economical nature required for the product and their function.

In particular many canopies are made with manually operated or electric motor devices which permit raising of the rear part thereof and then sliding backward while opening.

The construction logic contemplates correct positioning of the canopies when open, comfortable ventilation of the passenger compartment of the vehicles while remaining in a substantially valid position from the aerodynamic viewpoint, correct orientation against the flow of apparent wind produced by movement of the vehicle and stable accident prevention orientation.

These advantageous qualities are however obtained with present control devices for positioning and safety by means of very complex members which are costly and subject to failure. Another shortcoming is that the complexity of said devices, and in particular those of raising and supporting the canopies, is such as to limit their effectiveness and allow rather limited opening. In particular, the greatest opening by rearward traversing of the canopies at present possible is limited to approximately one third of the entire space available of the canopy.

Said limitation is of course limiting in respect of the principal purpose of the canopy.

The object of the present invention is to eliminate the aforesaid shortcomings. The invention as characterized in the claims solves the problem with an automotive vehicle canopy opening and closing device by means of which there are obtained the following results: the canopy body is supported by rigid supports held in position by coupling means which engage with sliding levers which, while performing an oscillating movement during opening and/or closing, remain firmly engaged with the traversing members. Said traversing means are connected to sliding carriages through coupling members and levers for anchoring, guiding and consent or not of rotation. The sliding devices move along a metal shape whose configuration is especially conceived for perfect and long guidance thereof.

The advantages of the present invention lie essentially in that all the operating devices are firmly engaged together forming very compact, rigid and safe structures. The sliding of the traversing means is sufficiently long, within the limitations of the basic shapes, to allow opening certainly greater than half of the space available of the canopy. Said opening can reach even approximately two thirds of said space without thereby detracting from the structural characteristics of strength and stability of the unit.

Other advantages consist of the fact that the operating devices consist of a plurality of components sufficiently limited and simple to make the unit easy to install and remove, convenient to maintain and fundamentally economical enough.

The invention is described and illustrated below in accordance with a preferred but not limiting embodiment thereof with reference to the annexed drawings wherein:-
FIG. 1 shows a cross section of a device corresponding to one side of a canopy when closed,
FIG. 2 shows a cross section of the same device when open,
FIG. 3 shows a partial perspective view of a carriage with traverser of one of the devices,
FIG. 4 shows an example of control of the operating device with reduction gear and helical cables,

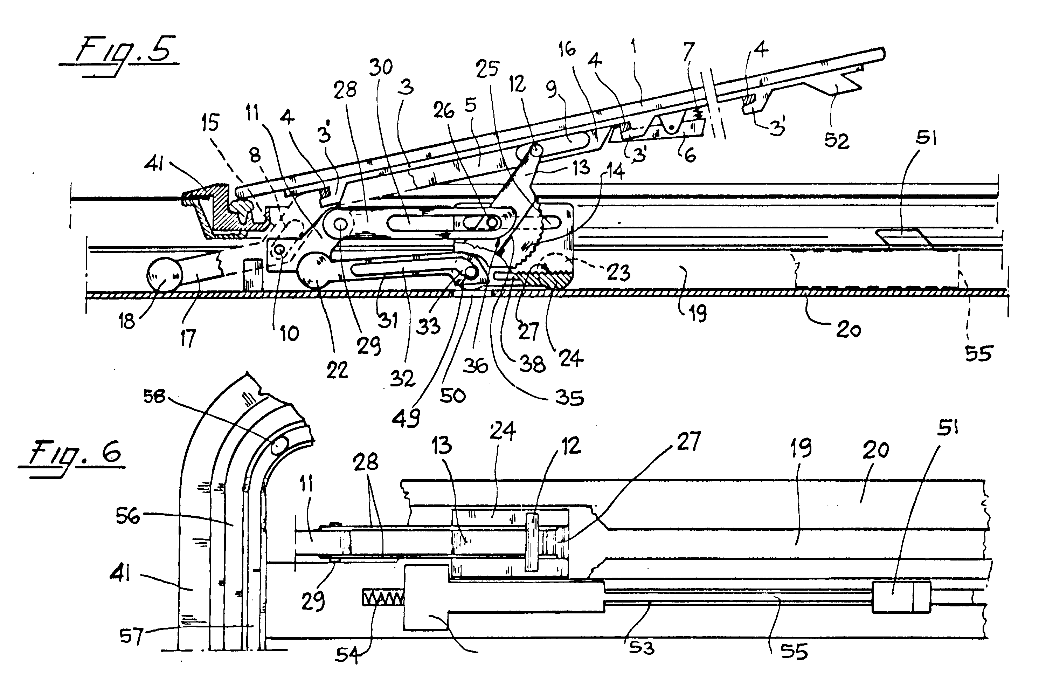

FIG. 5 shows a longitudinal cross section of a device in its entirety, and
FIG. 6 shows a partial plan view of the coupling between the sliding carriage and the closing coupling means.

The figures illustrate an opening and closing operating device for the canopies of automotive vehicles in which a sliding glass or cover (1) is held up along its two side edges by rigid supports (3) on which there are coupling serrations (3') which, when the unit is installed, engage with an equal number of connections (4) on shaped sliding levers (5).

At least one of said connections (4) is coupled with a locking lever (6) by elastic pressure means (7).

Said coupler imposes a rigid and safe constraint between said supports (3) and their respective shaped levers (5) which have two slot configurations (8) and (9) in which are engaged respectively the pins (10) at the front ends of the traversing members (11) and the pins (12) on the ends or the levers (13) with circular sector gears (14).

The shaped levers (5) take on a partially deviated configuration at a point adjacent (15) to the slot (8) to then resume a straight appearance parallel to the end (16) at their end (17) with which is combined at least one cylindrical member or a sliding wheel (18).

Each element (18) runs in side guides included in the central seat (19) of a shape (20) constituting one of the two side guides of the glass or cover (1). Beside said seat (19) in a guide there slides the cylindrical or wheel member (22) of each traversing member (11) while in the central seat (19) also run the cylindrical or wheel members (23) of the carriages (24).

The carriages (24) have side walls with slots (25) in which are engaged the ends of the pins (26) constituting the fulcrum of said levers (13). The sector gears (14) of said levers mesh with racks (27) integral with the carriages and located on their base between said side walls. Each traversing member (11) couples with a corresponding carriage (24) through two parallel levers (28) which on one side have side pins (29) for fulcrums integral with the traversing members and on the other side slots (30) in which are engaged in a sliding manner said fulcrum pins (26) for said levers (13) with circular sector gears (14).

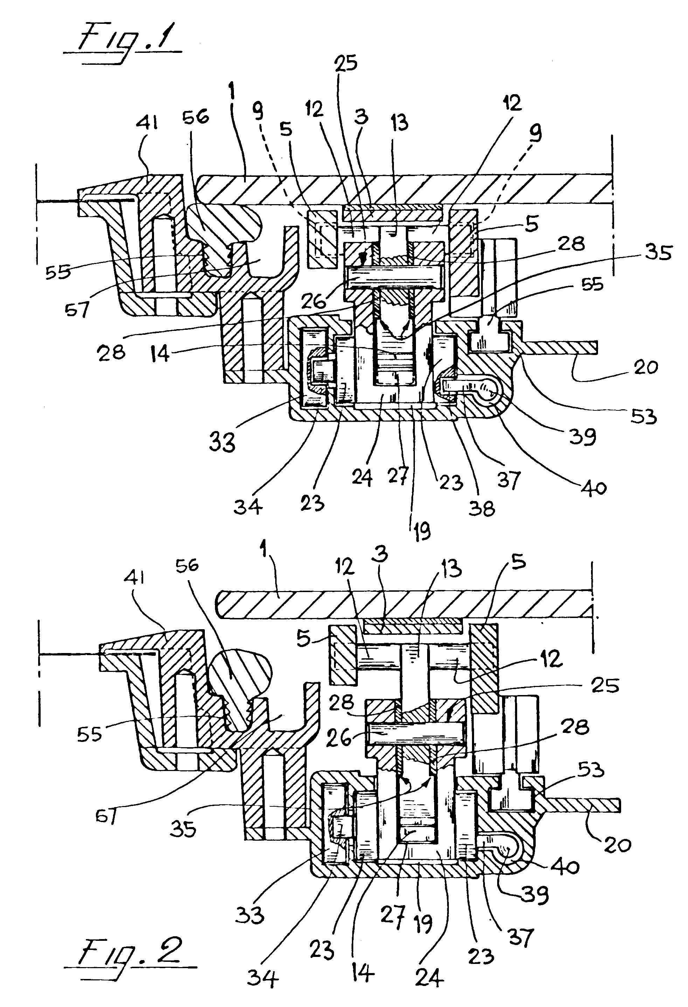

Said traversing members (11) also comprise lower extensions (31) equipped with longitudinal grooves (32) with an end curve (33). In said grooves are engaged pins (34) substantially coaxial with the front wheels or cylindrical bodies (23) of the carriages (24). The parallel levers (28) are positioned at the sides of the levers (13) with circular sector gears (14) and exert a longitudinal guide function thereof because, when the canopy of FIG. 1 is closed, they engage in a sliding manner with the peripheral edges with linear profile (35) of the sides of said levers. The ends (36) of said levers are radiused and allow correct rotating guidance of the levers (13) during the rotary motion which raises and opens of the canopy.

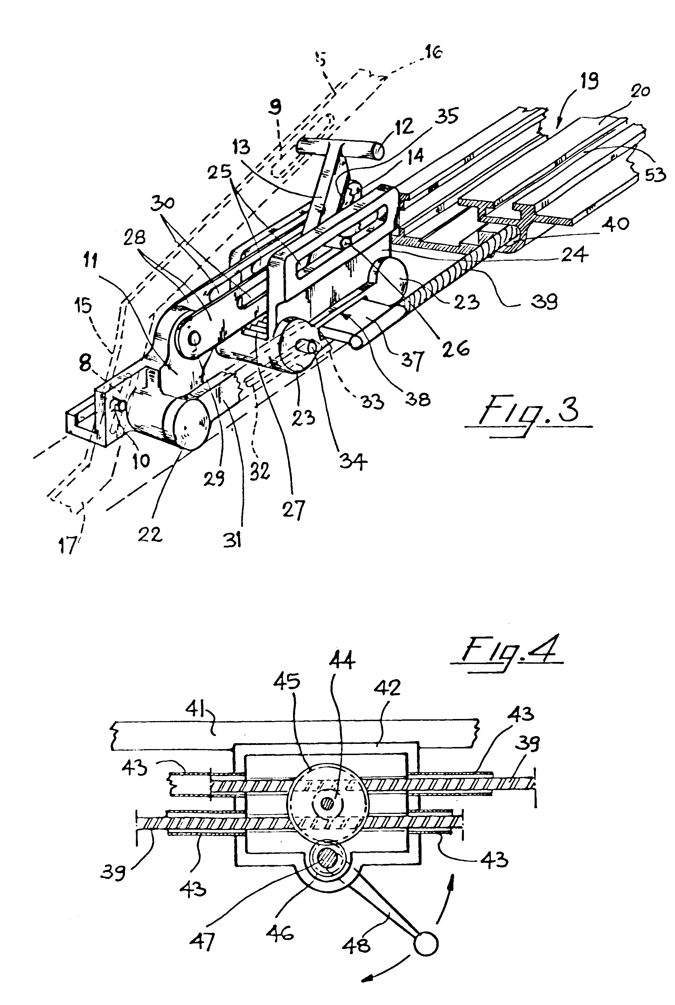

Sliding of the devices described in two directions is achieved preferably but not in a limited manner by means of a serration (37) which engages with a chamber (38) made in the side of said carriages (24). To each serration (37) there leads a flexible spiral cable (39) which extends along a hollow passage (40) in the side of the shape (20). In the front central zone of the fixed frame (41) of the canopy of FIG. 4 is arranged in a substantially conventional manner a means of control which intervenes on the operating devices which are the object of the present invention.

In particular said means comprises a box (42) with opposing and parallel tubular members (43) in which run the two spiral cables (39) extending respectively to the couplings (37) of the sliding carriages (24) arranged along the fixed side guides (20). The spiral cables (39) run between the box (42) and the slide carriages (24) through said parallel tubular members (43) which join in the hollow passages (40) in the shapes (20) constituting the side guides.

The cables (39) are parallel and mesh in diametrically opposed position with a double helical gear (44) on whose rotation axle is keyed another gear (45) having greater diameter and number of teeth.

A pinion (46) couples with the gear (45) to form a reduction gear which facilitates the sliding operation of the traversing members with reduced speed.

With the central keyed pin (47) of the pinion (46) is constrained preferably but not in a limited manner a conventional crank (48) for manual movement. As an alternative said crank can be replaced by conventional motorized means.

In the opening movement, turning the crank (48) subjects the helical cables (39) to traction. The serrations (37) engaged in the chambers (38) begin to pull the carriages (24) while the traversing members (11) remain temporarily still in their position because the end serrations (49) of their extensions (31) remain engaged in cavities (50) on the bottom of the shapes (20).

Backward movement of the carriages (24) causes return of the closing tie-rods (55), freeing their serrations (51) from those (52) on the ends of the shaped slide levers (5). The closing tie-rods (55) sliding along side grooves (53) of the shapes (20) engage against said carriages (24) on closing. On opening they are recalled by counteracting springs (54) which force them to draw back.

In the above-mentioned release phase the carriages (24) draw back while holding the levers (13) in the closing position. The side levers (28) which run along the straight peripheral edges (35) act on said levers (13), excluding any possibility of rotation around the fulcrum pins (26). Sliding is allowed by the slots (25) of the carriages and by those (30) of the side levers (28). After release the radiused rear ends (36) of the side levers (28) are aligned concentrically with the fulcrum pins (26) while the opposing pins (12) of the levers (13) are pushed to the rear end of the slots (9) on the shaped slide levers (5).

As the carriages (24) continue sliding rearward the levers with circular sector gear (13), being freed from engagement with the straight edges (35) of the side levers (28), begin to rotate upward pulled by the meshing of the teeth (14) with the rack (27). Their rotation causes rising of the pins (12) and consequently of the levers (5) engaged therewith of the rigid supports (3) and the glass or cover (1). Said rasing is limited to the rear part of the canopy because the front thereof with its associated rigid supports conforms to the inclined position taken by the shaped levers (5) whose ends (17) with sliding cylindrical members or wheels (18) remain in adherence with the guides included in the shapes (20).

As it continues sliding backward the canopy raised at the rear is traversed backward. This is possible because the pins (34) which are coaxial with the front wheels or cylindrical bodies (23) of the carriages (24) engage with the curved end part (33) of the longitudinal grooves (32) on the extensions (31) of the traversing members (11). Said engagement causes raising of the end serrations (49) and disengagement thereof from the slots (50) on the bottom of the shapes (20). At this point both the carriages (24) and the traversing members (11) are pulled backward and the glass or cover (1) moves in the same direction while keeping its inclined position until it uncovers a large part of the passage space below.

Thanks to the small size of the devices, their compactness and the sliding which they can perform along the guides (20) the open space left by rearward sliding of the canopy can reach a size equal to or greater than two thirds of its length.

In reversing the traversing motion of the carriages (24) by reversing the motion of the helical cables (39), the glass or cover (1) closes and first slides forward while remaining inclined upward in its part, then, when the traversing members (11) encounter the catches, all the phases described above are completed but in reverse order until complete closing, with the serrations (51) of the tie-rods (55) engaged with those (52) of the shaped levers (5). Finally the fixed frame (41) is configured in such a manner as to constitute, in addition to support for the guides (20), a peripheral sealing zone (55) with gasket (56) and a peripheral channel (57) for collection of any drops of water and in which are made drain holes (58) connected to the conventional water scavenging ducts in vehicles in general.

It is also specified that the present device, illustrated and described in accordance with a preferred and economical embodiment thereof, can be modified in the structure and details without thereby going beyond the scope of the invention as defined by the claims. In particular the traversing means with spiral cable (39) can be replaced by other known devices such as those with continuous cable, worm gear and lead nut with geared branches and so on.

## Claims

1. Operating device for opening and closing motor vehicle canopies characterized in that it comprises carriages (24) which slide when pulled and which combine with traversing members (11) by means of grooved side levers (28) in which are engaged the fulcrum pins (26) of the levers (13) with circular sector gears (14) which mesh with racks (27) integral with said carriages, said circular sector levers (13) and said traversing members (11) being combined with shaped levers (5) for coupling with and supporting sliding glasses or covers (1) through moving fulcrums consisting of the coupling of pins (12), levers (13) and pins (10) of the traversing members (11) with respective slots (9) and (8) of the levers (5), the assembly consisting of the carriages (24), traversing members (11) and shaped levers (5) sliding in shapes (20) in which are made in the associated guides.

2. Device in accordance with claim 1 characterized in that the carriages (24) are equipped with side cylindrical bodies or wheels (23) for sliding and comprise a central fixed rack (27) and are equipped with side walls in which are made longitudinal slots (25) constituting the seats of the fulcrum pin (26) of the corresponding lever (13) with circular sector gear (14) which couples with said rack. Said lever (13) comprises transverse pins (12) for engagement with the slots (9) of the shaped levers (5).

3. Device in accordance with claims 1 and 2 characterized in that the carriages (24) are equipped with side chambers (38) in which engage serrations (37) integral with the ends of the pulling means consisting of flexible spiral cables (39). Said cables slide along passages (40) in the shapes (20) constituting the side guides of the canopy.

4. Device in accordance with claim 1 characterized in that the carriages (24) and traversing members (11) are engaged together either through the combination of the grooved side levers (28) and fulcrum pins (26) of the levers (13) inserted in the slots (25) or through the coupling of pins (34) coaxial with the front cylindrical bodies or wheels (23) of the carriages (24) with the longitudinal grooves (32) along the lower extensions (31) of said traversing members. Said grooves (32) have one downward deviated end (33) placed opposite the end serrations (49) of the extensions (31) combined and engaging upon closing with slots (50) arranged on the bottom of each guide shape (20).

5. Device in accordance with claims 1 and 4 characterized in that the grooved side levers (28) engage in a longitudinally sliding manner with the peripheral edges with linear profile (35) on the sides of the levers (13) with circular sector gear (14). Said engagement, which occurs during the beginning and the end of the sliding phases of the carriages (24), corresponds to the opening and closing of the sliding glasses or covers (1) and follows a curved path of adherence to the radiused edges of the ends (36) of said levers (28) with a resulting rotation of the levers (13) whose teeth (14) are engaged with the moving rack (27).

6. Device in accordance with claims 1 and 2 characterized in that the shaped levers (5) supporting and moving the sliding glass or cover (1) are equipped with connections (4) which engage in a rigid coupling with serrations (3') on rigid side supports (3) integral with the sliding glass or cover (1) while at least one of said serrations (3') is combined with a locking lever (6) complete with elastic pressure and retention means (7).

7. Device in accordance with claims 1 and 4 characterized in that upon closing the carriages (24) engage with side tie-rods (55) provided with couplings (51) coupling with an equal number of constraint means (52) on the shaped levers (5). Said tie-rods slide in side seats (53) on the guide shapes (20) and are equipped with retention and return means (54) such as springs.

8. Device in accordance with claims 1 and 3 characterized in that the traversing means (39) are operated manually or by a motor.

9. Device in accordance with claims 1, 3 and 8 characterized in that the traversing means consisting of flexible spiral cables (39) engaged in diametrically opposed position with a helical gear (44) keyed on the same axle of a gear with greater diameter and number of teeth (45) which meshes with a pinion (46) operated by a crank (48) or an electric motor and said reducer unit is included in a box (42) integral with the fixed frame (41) of the canopy and from which extend the opposed and parallel tubular ducts (43) which guide the running of said cables (39) which join in the hollow passages (40) in the guide shapes (20).

## Patentansprüche

1. Betätigungsvorrichtung zum Öffnen und Schließen von Kabinenhauben von Motorfahrzeugen, dadurch gekennzeichnet, daß sie Schlitten (24) aufweist, die gleiten, wenn sie gezogen werden, und die sieh mit Schiebegliedern (11) über genutete Seitenhebel (28) verbinden, in die die Drehpunktstifte (26) der Hebel (13,) mit kreissektorförmigen Zahnkränzen (14) eingreifen, welche mit Zahnstegen (27) der Schlitten kämmmen, wobei die Kreisektorhebel (13) und die Schiebeglieder (11) mit formgestalteten Hebeln (5) zum Ankuppeln und Stützen voll gleitenden Verglasungen oder Hauben (1) durch Bewegen von Drehpunkstiften verbunden sind; bestehend aus dem Kuppeln von Stiften (12), Hebeln (13) und Stiften (10) der Schiebeglieder (11) mit entsprechenden Schlitzen (9) und (8) der Hebel (5), wobei die aus den Schlitten (24), den Schiebegliedern (11) und den form gestalteten Hebeln (5) bestehende Montageverbindung in Formkörpern (20) gleitet, in denen die zugehörigen Führungen ausgebildet sind.

2. Vorrichtung nach Anspruch 1, dadurch gekennzeichnet, daß die Schlitten (24) mit zeitlichen, zylindrischen Körpern oder Rädern (23) zum Gleiten versehen sind und einen feststehenden zentralen Zahn-Steg (27) umfassen, und mit Seitenwänden versehen sind, in der Längsschlitze (25) angebracht sind, die die Sitze der Drehpunktstifte (26) des entsprechenden Hebels (13) mit kreissektorförmigen Zahnkranz (14) bilden, der mit dem Zahnsteg in Eingriff steht, wobei der Hebel (13) Querstifte (12) zum Eingriff in die Schlitze der formgestalteten Hebel (5) umfaßt.

3. Vorrichtung nach den Ansprüchen 1 und 2, dadurch gekennzeichnet, daß die Schlitten (24) mit Seitenkammern (38) versehen sind, in die Kerbzähne (37) der Enden der aus flexiblen Spiralkabeln (39) bestehenden Zieheinrichtungen eingreifen, wobei die Kabel durch Kanäle (40) in den Formkörpern (20) laufen, die die Seitenführungen der Kabinenhaube bilden.

4. Vorrichtung nach Anspruch 1, dadurch gekennzeichnet, daß die Schlitten (24) und die Schiebeglieder (11) entweder durch die Verbindung der genuteten Seitenhebel (28) mit den Drehpunktstiften (26) der in die Schlitze (25) eingreifenden Hebel (13), oder durch das Kuppeln von Stiften (34), die koaxial zu den vorderen zylindrischen Körpern oder Rädern (23) der Schlitten (24) angeordnet sind, mit den Längsnuten (32) entlang der unteren Erweiterungen (31) der Schiebeglieder in Eingriff gebracht sind, wobei die Nuten (32) ein nach unten abgebogenes Ende (33) aufweisen, das gegenüber den Endkerbzähnen (49) der Erweiterungen (31) plaziert ist und sich beim Schließen mit Schlitzen (50) vereinigt, die auf dem Boden jedes Führungskörpers (20) angebracht sind.

5. Einrichtung nach den Ansprüchen 1 und 4, dadurch gekennzeichnet, daß die genuteten Seitenhebel (28) beim längsgerichteten Gleiten mit den peripheren Rändern in Eingriff mit geradlinigen Profilen (35) der Seiten der Hebel (13) mit kreissektorförmigen Zahnkränzen (14) kommen, wobei der Eingriff, der während des Anfangs und des Endes der Gleitphasen der Schlitten (24) erfolgt, dem Öffnen und Schließen der Schiebeverglasungen und Hauben (1) entspricht und einen gekrümmten Anbindungspfad zu den abgerundeten Rändern der Enden (36) der Hebel (28) mit einer resultierenden Drehung der Hebel (13) verfolgt, deren Zähne (14) mit dem sich bewegenden. Zahnsteg (27) in Eingriff stehen.

6. Vorrichtung nach den Ansprüchen 1 und 2, dadurch gekennzeichnet, daß die formgestalteten Hebel (5), die die gleitende Verglasung oder die Haube (1) stützen und bewegen, mit Anschlüssen (4) versehen sind, die in starre Kupplung mit Kerbzähnen (3') auf starren Seitenträgern (3) der gleitenden Verglasung oder Haube (1) in Eingriff gelangen, während sich mindestens einer der Kerbzähne (3') mit einem Sperrhebel (6) vereinigt, der mit elastischen Druck- und Halteinrichtungen (7) ergänzt ist.

7. Vorrichtung nach den Ansprüchen 1 und 4, dadurch gekennzeichnet, daß beim Schließen die Schlitten (24) mit seitlichen Verbindungsstangen (55) in Eingriff kommen, die sich mit einer gleichgroßen Anzahl von Hemmeinrichtungen (52) an den formgestalteten Hebeln (5) verbinden, wobei die Verbindungsstangen in seitlichen Sitzen (53) auf den Führungsformkörpern (20) gleiten und mit Rückhalte- und Rückführungseinrichtungen (54), wie etwa Federn, versehen sind.

8. Vorrichtung nach den Ansprüchen 1 und 3, dadurch gekennzeichnet, daß die Schiebeeinrichtungen (39) von Hand oder von einem Motor betätigt werden.

9. Vorrichtung nach den Ansprüchen 1, 3 und 8, dadurch gekennzeichnet, daß die aus flexiblen Spiralkabeln (39) bestehende Schiebeeinrichtung, die in diametral einander gegenüberliegender Lage mit. einen, Schneckenrad (44) in Eingriff stehen, das auf der gleichen Achse eines Zahnrades mit einem größeren Durchmesser und einer größeren Anzahl von Zähnen (45) angebracht ist, welches mit einem Ritzel (46) kämmt, das von einer Kurbel (48) oder einen, Elektromotor angetrieben wird, und daß die genannte Untersetzereinheit in einem Gehäuse (42) untergebracht ist, das integrierter Bestandteil des feststehenden Rahmens (41) der Kabinenhaube ist, und von wo aus sich die einander gegenüberliegenden und parallelen Kanäle (43) erstrecken, die das Laufen der Kabel (39) führen, welche sich in den hohlen Durchgängen (40) in den Führungsformkörpern (20) vereinen.

## Revendications

1. Dispositif de commande de l'ouverture et de la fermeture de capotes de véhicules à moteur,
caractérisé en ce qu'il comprend des chariots (24) qui glissent lorsqu'on les tire et qui coopèrent avec des éléments traversants (11) au moyen de leviers latéraux rainurés (28) dans lesquels s'insèrent les axes d'articulation (26) de leviers (13) munis de secteurs dentés circulaires (14) qui s'engrènent avec des crémaillères (27) solidarisées avec lesdits chariots, lesdits leviers à secteurs dentés (13) et éléments traversants (11) coopérant avec des leviers profilés (5) en vue d'un accouplement et pour supporter des vitres ou capotes coulissants (1) au moyen de points d'appui mobiles consistant en l'accouplement d'axes (12), de leviers (13) et d'axes (10) des éléments traversants (11) avec des fentes (9) et (8) des leviers (5), l'agencement comportant les chariots (24), les éléments traversants (11) et les leviers profilés (5) coulissant dans des conformations (20) prévues dans des dispositifs de guidage associés.

2. Dispositif selon la revendication 1,
caractérisé en ce que les chariots (24) sont équipés de corps cylindriques latéraux ou roues (23) pour coulisser, comprennent une crémaillère centrale fixe (27) et sont équipés de parois latérales dans lesquelles sont prévues des fentes longitudinales (25) qui forment les sièges de l'axe d'articulation (26) du levier correspondant (13) à secteur denté circulaire (14) qui coopère avec ladite crémaillère. Ce levier (13) comprend des axes transversaux (12) qui s'engagent dans les fentes (9) des leviers (5).

3. Dispositif selon les revendications 1 et 2,
caractérisé en ce que les chariots (24) sont équipés de chambres latérales (38) dans lesquelles s'engagent des dentelures (37) solidaires des extrémités des moyens de traction qui consistent en des câbles hélicoïdaux flexibles (39). Ces câbles coulissent le long de passages (40) dans les conformations (20) qui constituent les guides latéraux de la capote.

4. Dispositif selon la revendication 1,
caractérisé en ce que les chariots (24) et les éléments traversants (11) coopèrent, soit par l'ensemble des leviers latéraux rainurés (28) et des axes d'articulation (26) des leviers (13) qui pénètrent dans les fentes (25), soit grâce à la coopération d'axes (34) qui sont coaxiaux aux corps cylindriques ou roues antérieurs (23) des chariots (24) avec les rainures longitudinales (32) s'étendant dans les prolongements inférieurs (31) desdits éléments traversants. Une des extrémités (33) de ces rainures (32) est déviée vers le bas et placée à l'opposé des dentelures d'extrémité (49) des prolongements (31) et coopérant à la fermeture avec et s'inserant dans des fentes (50) prévues dans le fond de chaque conformation de guidage (20).

5. Dispositif selon les revendications 1 et 4,
caractérisé en ce que les leviers latéraux rainurés (28) coopèrent par coulissement longitudinal avec les bords périphériques à profil linéaire (35) des côtés des leviers (13) munis de secteurs circulaires (14). Cette coopération, qui a lieu au début et à la fin des phases de coulissement des chariots (24), correspond à l'ouverture et à la fermeture des vitres ou capotes coulissantes (1) et suit un trajet incurvé selon les bords incurvés des extrémités (36) desdits leviers (28), ce qui fait pivoter les leviers (13) dont les dents (14) sont engagées dans la crémaillère mobile (27).

6. Dispositif selon les revendications 1 et 2,
caractérisé en ce que les leviers profilés (5) qui supportent et déplacent la vitre ou la capote coulissante (1) sont équipés de connexions (4) qui sont rigidement couplées avec des dentelures (3') de supports latéraux rigides (3) solidaires de la vitre ou de la capote coulissante (1), tandis qu'au moins une desdites dentelures (3') coopère avec un levier de verrouillage (6) muni de moyens élastiques de pression et de retenue (7).

7. Dispositif selon les revendications 1 et 4,
caractérisé en ce qu'à la fermeture, les chariots (24) coopèrent avec des tiges de raccordement latéraux (55) munies de raccords (51) qui sont connectés à un nombre égal de moyens de contrainte (52) prévus sur les leviers profilés (5). Ces tiges de raccordement coulissent dans des sièges latéraux (53) prévus sur les conformations de guidage (20) et sont équipés de moyens de retenue et de rappel (54) tels que des ressorts.

8. Dispositif selon les revendications 1 et 3,
caractérisé en ce que les moyens traversants (39) sont commandés manuellement ou par un moteur.

9. Dispositif selon les revendications 1, 3 et 8,
caractérisé en ce que les moyens traversants formés par des câbles hélicoïdaux flexibles (39), coopèrent dans une position diamétralement opposée, avec une transmission hélicoïdale (44) disposée sur le même axe qu'une transmission de plus grand diamètre et munie d'un plus grand nombre de dents (45), qui s'engrène avec un pinion (46) commandé par une manivelle (48) ou un moteur électrique, et en ce que ce système réducteur est inclus dans un boîtier (42) solidarisé avec le châssis fixe (41) de la capote duquel font saillie les conduites tubulaires opposées (43) qui guident le cheminement des câbles (39) qui rejoignent les passages creux (40) des conformations de guidage (20).
